Europäisches Patentamt

European Patent Office

Office européen des brevets

(19)

(11) Numéro de publication : **0 360 699 B1**

(12) **FASCICULE DE BREVET EUROPEEN**

(45) Date de publication du fascicule du brevet :
**16.12.92 Bulletin 92/51**

(51) Int. Cl.⁵ : **F03D 7/02, F03D 11/04**

(21) Numéro de dépôt : **89402606.1**

(22) Date de dépôt : **22.09.89**

(54) **Procédé pour réguler une machine aérienne pour la transformation de l'énergie éolienne en énergie utile, et machine pour la mise en oeuvre de ce procédé.**

(30) Priorité : **23.09.88 FR 8812472**

(43) Date de publication de la demande :
**28.03.90 Bulletin 90/13**

(45) Mention de la délivrance du brevet :
**16.12.92 Bulletin 92/51**

(84) Etats contractants désignés :
**AT BE CH DE ES FR GB GR IT LI LU NL SE**

(56) Documents cités :
**EP-A- 0 033 258**
**DE-A- 2 810 239**
**FR-A- 2 568 948**
**GB-A- 703 577**

(72) Inventeur : **Girerd, Marc**
**Les Hautbois**
**F-45270 Villemoutiers (FR)**
Inventeur : **Girerd, Eric**
**21, avenue de la Croix du Sud**
**F-94550 Chevilly Larue (FR)**

(74) Mandataire : **Pontet, Bernard**
**Pontet & Allano s.a.r.l. 2, rue Jean Rostand**
**Parc Club Orsay Université**
**F-91893 Orsay Cédex (FR)**

(73) Titulaire : **Société dite : TOUTENKAMION**
**R.N. 60 Route de Bellegarde**
**F-45270 Ladon (FR)**
Titulaire : **GIRERD, Marc**
**Les Hautbois**
**F-45270 Villemoutiers (FR)**
Titulaire : **GIRERD, Eric**
**21 Avenue de la Croix du Sud**
**F-94550 Chevilly Larue (FR)**

## Description

La présente invention concerne un procédé pour réguler une machine aérienne pour la transformation de l'énergie éolienne en énergie utile.

La présente invention concerne également une machine pour la mise en oeuvre de ce procédé.

On connaît d'après le FR-A- 2 568 948 une éolienne comprenant un mât à l'extrémité supérieure duquel une structure basculante est articulée selon un axe horizontal, cette structure basculante portant elle-même à son extrémité libre un récupérateur d'énergie comportant un rotor à pales. En service, un système à ressort maintient la structure basculante dans une position angulaire d'élévation maximale du récupérateur. En cas de coup de vent brusque, la structure basculante s'incline passagèrement, moyennant tension accrue du ressort. Il n'est pas prévu d'utiliser une telle inclinaison pour réguler (stabiliser) la puissance de l'éolienne, pour laquelle on utilise une variation de l'inclinaison des pales. D'autre part, pour l'entretien du récupérateur, il est possible d'amener celui-ci au sol par pivotement de la structure basculante autour de l'axe horizontal. Un tel système est peu propice à la production régulière d'énergie. La machine fonctionne en général en sous-capacité, lorsque le vent est faible. En cas de coup de vent, les mouvements d'amortissement permis par le ressort se traduisent par des fluctuations dans la production.

On connaît encore d'après le US-A- 4 142 830, le EP-A- 0033258 et le DE-A- 28 10 239 des machines dans lesquelles le récupérateur s'oriente autour d'un axe horizontal pour se placer obliquement dans la veine d'air, et ainsi capter moins efficacement une veine d'air de section plus faible lorsque le vent devient fort. Ces machines ne sont que très mal protégées à l'égard des risques climatiques.

Le but de l'invention est de proposer une machine aérienne du type indiqué au début, qui à la fois permette une forte production énergétique sous une grande plage de forces de vent, tout en étant bien protégée à l'égard des risques climatiques.

Suivant le premier aspect de l'invention, le procédé pour réguler une machine aérienne pour la transformation de l'énergie éolienne en énergie utile du type comprenant un récupérateur d'énergie rotatif mobile en hauteur, est caractérisé en ce qu'on positionne le récupérateur de manière sensiblement stable à une hauteur par rapport au sol qui est une fonction décroissante de la force du vent.

Suivant le deuxième aspect de l'invention, la machine aérienne pour la transformation de l'énergie éolienne en énergie utile, comprenant un mât, un récupérateur d'énergie rotatif, des moyens de déplacement en hauteur du récupérateur par rapport au mât sous l'action de l'effort aérodynamique s'exerçant sur le récupérateur et à l'encontre de moyens de rappel et un dispositif de transformation d'énergie relié au récupérateur pour être entraîné en rotation par le récupérateur, est caractérisée en ce que les moyens de déplacement en hauteur sont conçus pour positionner le récupérateur de manière sensiblement stable à une hauteur par rapport au sol qui est une fonction décroissante de la force du vent.

L'invention est basée sur la constatation que la force du vent est d'autant plus faible que l'on se rapproche du sol. Le récupérateur de la machine selon l'invention se positionne et fonctionne d'autant plus près du sol que le vent est fort.

La machine peut être dimensionnée pour fournir sa puissance nominale sous un vent relativement faible, qui sera capté à grande hauteur au-dessus du sol, et fournir sensiblement la même puissnce par vent fort, capté beaucoup plus près du sol. Ainsi, la puissance captée est souvent voisine de la puissance nominale et, deuxième résultat, le récupérateur est à l'abri, c'est-à-dire proche du sol, en cas de vent fort.

Le procédé selon l'invention prévoit que la hauteur de positionnement du récupérateur est une fonction décroissante de la force du vent. Ceci n'exclut pas que la hauteur de positionnement du récupérateur soit fonction d'autres variables. En particulier, pour une force de vent donnée, la hauteur du récupérateur pourra varier en fonction de la puissance demandée à la machine par les utilisateurs de l'énergie produite.

De préférence, lorsque les moyens de déplacement en hauteur comprennent une structure basculante qui porte le récupérateur à distance d'un axe de basculement sensiblement horizontal selon lequel ladite structure basculante est articulée relativement au mât, on prévoit au titre des moyens de rappel qu'un plan idéal vertical contenant l'axe de basculement s'étend entre le récupérateur et le centre de gravité de l'équipage (c'est-à-dire par exemple l'ensemble comprenant la structure basculante, le récupérateur et un contrepoids) qui est mobile autour de l'axe de basculement.

On minimise ainsi les moments de flexion subis par le mât, et on minimise donc le coût du mât et le coût de son implantation. Au contraire, selon le FR-A- 2 568 948, le ressort qui bloque partiellement l'articulation de basculement accroît le moment de flexion subi par le mât.

De préférence, il est prévu pour imiter la course du récupérateur vers le haut, des moyens d'appui reposant sur le sol lorsque le récupérateur est en position de vent faible.

Selon le FR-A- 2 569 948, les moyens d'appui reposent sur le mât et accroissent encore le moment de flexion subi par le mât.

Il est également préféré que la machine comprenne des moyens souples de support en suspension du récupérateur. Grâce à ces moyens souples, les vibrations résultant du fonctionnement du récupérateur sont découplées du reste de la structure, ce qui évite le risque que ces vibrations produisent des résonances dangereuses dans le bâti et le mât.

D'autres particularités et avantages de l'invention ressortiront encore de la description ci-après.

Aux dessins annexés donnés à titre d'exemples non limitatifs :

- la figure 1 est une vue en perspective d'une machine selon l'invention ;
- la figure 2 est une vue explicative partielle, en élévation, de la machine de la figure 1 ;
- la figure 3 est une vue schématique de dessus de la machine des figures 1 et 2 ;
- la figure 4 est une vue analogue à la figure 3 mais concernant un deuxième mode de réalisation ;
- la figure 5 est une vue en élévation latérale d'un château d'eau équipé d'une éolienne selon un troisième mode de réalisation de l'invention ;
- la figure 6 est une vue de dessus du château d'eau de la figure 5 ;
- la figure 7 est une vue en perspective d'un quatrième mode de réalisation de la machine selon invention ;
- la figure 8 est une vue en élévation de la machine de la figure 7, le récupérateur étant en position haute,
- la figure 9 est une vue à échelle agrandie d'une partie de la figure 8, en cas de vent ;
- la figure 10 est une vue schématique de dessus d'un cinquième mode de réalisation de l'invention ;
- la figure 11 est une vue en élévation du cinquième mode de réalisation de l'invention ;
- la figure 12 est un détail de la figure 11, en cas de vent ;
- la figure 13 est une vue schématique en élévation de la machine aérienne de la figure 11, en présence d'un vent violent ; et
- les figures 14 et 15 sont des vues analogues aux figures 11 et 13, mais concernant un sixième mode de réalisation.

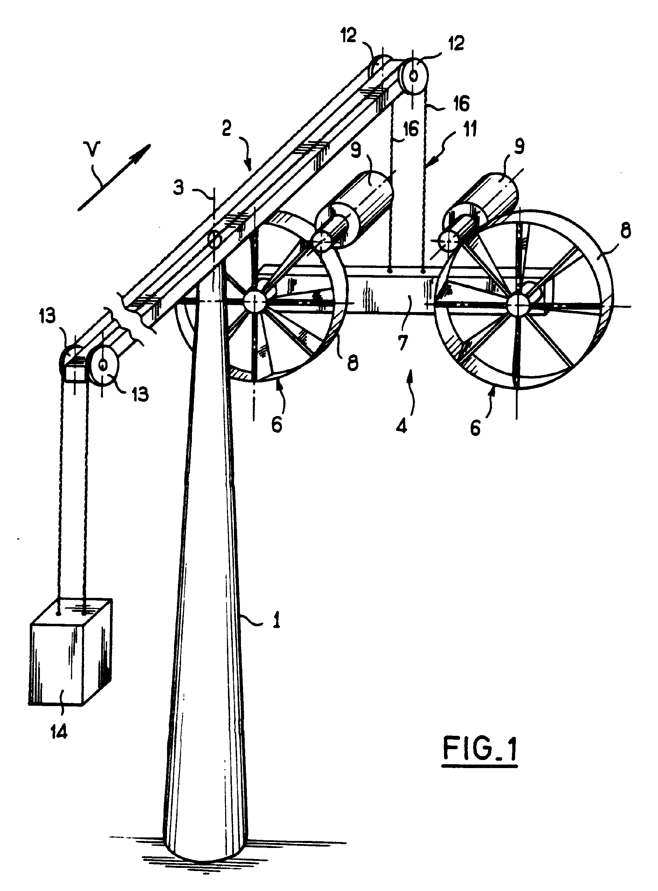

Dans l'exemple représenté à la figure 1, l'éolienne comprend un mât 1 fixé au sol de manière à s'étendre verticalement vers le haut à partir du sol, et un bâti 2 qui est monté au sommet du mât 1 de manière à être orientable par rapport au mât 1 autour d'un axe central vertical 3 du mât 1.

Le bâti orientable 2 porte un récupérateur d'énergie 4 comprenant deux rotors à pales 6. Les arbres centraux de ces rotors sont montés libres en rotation selon des axes parallèles, sur une monture 7. Chaque rotor 6 a une couronne périphérique 8 qui forme un volant d'inertie contribuant à la régulation de la machine et qui entraîne, par engrenage ou par friction, une machine asynchrone respective 9 pour transformer en courant électrique l'énergie éolienne recueillie par la machine. Les machines asynchrones 9 sont libres en rotation l'une par rapport à l'autre.

Le récupérateur 4 est relié au mât 1 de manière telle que les efforts aérodynamiques s'exerçant sur le récupérateur 4, et en particulier sur ses rotors 6, sous l'effet du vent dont la direction est représentée par la flèche V, se traduisent par une variation de la géométrie de la machine de manière que le récupérateur soit toujours positionné de façon optimale par rapport au vent, compte tenu de la puissance maximale admissible pour la machine, de la vitesse maximale de rotation des rotors, et de la puissance demandée.

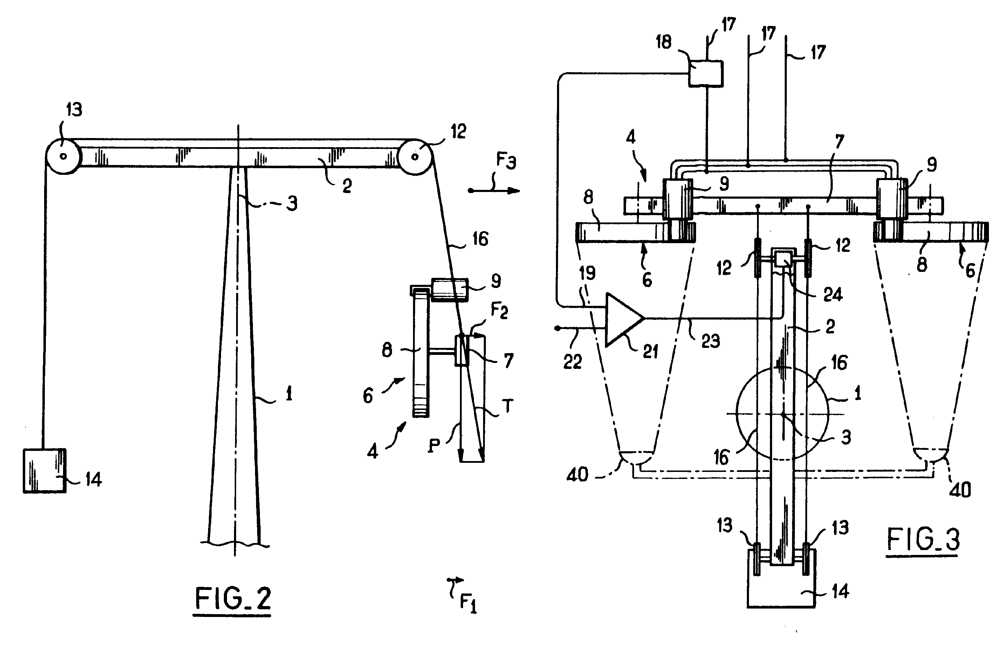

Au titre de ces moyens, le récupérateur 4 est suspendu au bâti orientable 2 par des moyens souples 11 qui contournent des poulies de renvoi 12 et 13 portées rotativement par le bâti 2. A leur extrémité opposée à la monture 7, les moyens souples 11 sont fixés à un contrepoids 14. Dans l'exemple, les moyens souples 11 comprennent deux câbles 16 qui s'étendent parallèlement l'un à l'autre, de manière à maintenir les axes des deux rotors 6 dans un même plan horizontal et à les maintenir sensiblement parallèles à un plan vertical P (figure 3) passant par l'axe 3, et équidistants de ce plan. Bien entendu, s'agissant de câbles souples, le positionnement ainsi assuré au récupérateur 4 n'est pas rigoureux, mais il est suffisant en pratique étant donné que la résultante des forces aérodynamiques s'exerçant sur le récupérateur n'a pas de composante importante qui serait capable d'agir entre le récupérateur et le bâti 2 pour déstabiliser le récupérateur par rapport au bâti. Par contre, les câbles 16 sont disposés de manière que la seule force de rappel s'opposant à un mouvement pendulaire du récupérateur 4 autour d'un axe perpendiculaire au plan P soit celle résultant du poids du récupérateur 4 et des moyens de transformation d'énergie 9 qui en sont solidaires.

La masse de cet ensemble est inférieure à la masse du contrepoids 14, de sorte qu'en l'absence d'autres efforts, en particulier en l'absence de vent, le récupérateur 4 se place en position haute, près du bâti 2, le contrepoids 14 étant proche du sol.

Par contre, comme représenté à la figure 2, lorsqu'il s'exerce sur le récupérateur 4 un effort aérodynamique F2, cet effort dirigé sensiblement horizontalement s'ajoute vectoriellement au poids P de l'ensemble récupérateur 4 - génératrice 9 pour donner aux câbles 16 une tension T qui est supérieure en valeur absolue au poids P. Etant donné que la force aérodynamique susceptible de s'exercer sur le récupérateur croît avec l'altitude (voir figure 2 la force F1 au voisinage du sol, la force F2 à une altitude moyenne et la force F3 à une altitude maximale du récupérateur), le récupérateur 4 se stabilise à une altitude où la tension T des câbles 16 à leur extrémité côté récupérateur est égale au poids du contrepoids 14.

De plus, comme le montre la figure 2, le câble 16 prend au-dessus du récupérateur 4 une inclinaison qui s'écarte d'autant plus de la verticale que l'effort aérodynamique est important. Ainsi en cas de brusque coup de vent de type tempête, le récupérateur esquive le coup de vent de deux manières, d'une part en s'éloignant du mât 1 dans la direction du vent et d'autre part en se rapprochant du sol jusqu'à ce que la tension T redevienne égale au poids du contrepoids 14.

Si la puissance demandée par les utilisateurs aux génératrices 9 est relativement faible, le réglage assuré par l'équilibre précité entre le contrepoids 14 et le récupérateur peut correspondre à une vitesse de rotation excessive des rotors 6.

Comme représenté à la figure 3, on peut éviter cet inconvénient en montant sur l'un des trois fils de phase 17 de la ligne de sortie des génératrices 9 un fréquence-mètre 18 dont la sortie est envoyée à l'une des entrées 19 d'un comparateur 21, dont l'autre entrée 22 est reliée à une consigne. La sortie 23 du comparateur 21 commande un servo-moteur 24 monté sur l'arbre des poulies 12 et communiquant à celle-ci, lorsqu'il est activé, un couple de rotation dans le sens de la descente du récupérateur 4 vers le sol. Il peut également arriver que la vitesse de rotation des rotors 6 soit insuffisante. Ceci peut résulter d'une surcharge provoquée par les utilisateurs. On peut se prémunir à l'encontre d'un tel inconvénient en prévoyant un disjoncteur capable de mettre hors-circuit tout ou partie de l'installation.

La vitesse des rotors 6 peut également être insuffisante en raison d'une absence quasi-totale de vent. Dans ce cas, même si le récupérateur 4 se place le plus haut possible par rapport au sol la vitesse de rotation des rotors peut être insuffisante et la puissance fournie relativement faible. Dans le cadre d'une installation autonome (la machine n'est reliée qu'à un certain nombre de points d'utilisation bien déterminés), il est possible de prévoir que le disjoncteur soit sensible à la fréquence du courant fourni par les génératrices 9, et non pas à l'intensité de ce courant.

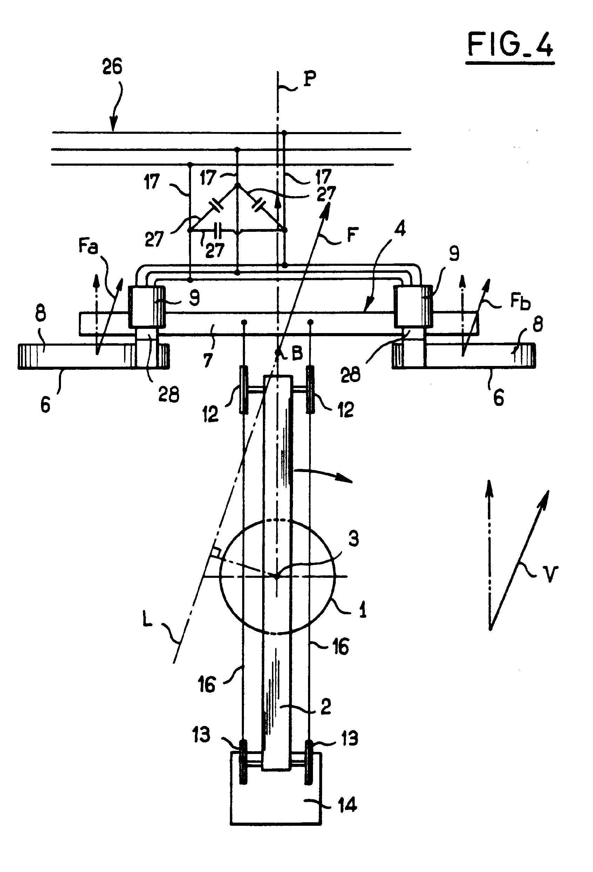

Dans le cas d'une machine reliée à un réseau de distribution électrique 26 (figure 4), il est prévu selon l'invention de monter des condensateurs 27 entre les fils de phase 17 (ou, en variante, entre chaque fil de phase 17 et un point de neutre). De plus, chaque génératrice 9 est en prise avec le rotor 6 associé par intermédiaire d'un dispositif à roue libre 28 permettant à la génératrice de tourner plus vite que le rotor associé. Les génératrices 9 étant des génératrices asynchrones, en cas de vitesse impartie par le rotor 6 insuffisante, les génératrices 9 se mettent à fonctionner en moteur tournant à vide puisque grâce aux roues libres 28, elles n'ont pas à entraîner le rotor 6 associé. Ceci évite que les génératrices 9 dégradent le courant fourni aux usagers par le réseau 26.

Le récupérateur 4 est positionné latéralement par rapport à l'axe de pivotement 3 du bâti 2 de façon que le barycentre B (figure 4) d'application de la résultante des forces aérodynamiques s'exerçant sur le récupérateur 4, en particulier les forces Fa et Fb s'exerçant sur les rotors 6, soit situé à distance de l'axe 3. Ainsi, le récupérateur 4 tend en permanence à se positionner en arrière du mât 1 par rapport à la direction du vent, ce positionnement s'effectuant par rotation du bati 2 autour de l'axe 3.

Plus précisément, lorsque la ligne d'action L de la résultante F ne passe pas par l'axe 3, elle exerce autour de l'axe 3 un moment de rotation tendant à faire tourner le bâti et par conséquent le récupérateur 4 autour de l'axe 3. Cette situation est représentée à la figure 4. Elle est donc instable. La situation stable est représentée en traits mixtes, il s'agit de la situation où la résultante F a une ligne d'action passant par l'axe 3, la direction du vent V étant naturellement parallèle à cette ligne d'action. Grâce à la symétrie du récupérateur 4 par rapport au plan P, P est alors parallèle à la direction du vent.

Le barycentre B étant sensiblement situé dans le plan commun des rotors 6, la distance précitée entre le barycentre B et l'axe 3 est réalisée en donnant au bras 2 une longueur significative dans le plan P, en particulier en positionnant l'axe des poulies 12 à une distance significative de l'axe de pivotement 3. La position de l'axe des poulies 13 est sensiblement symétrique de celle de l'axe des poulies 12 par rapport à l'axe 3. Ainsi, les forces verticales s'exerçant sur le bras 2 de part et d'autre de l'axe 3 sont sensiblement les mêmes, et le bras 2 n'a pas à résister à un couple de basculement.

Pour une meilleure symétrie des efforts s'exerçant sur la machine, les deux rotors 6 ont des pales orientées différemment, de manière qu'ils tournent en sens opposés, de même que les génératrices 9 qui sont également disposées symétriquement par rapport au plan P. Le fait que les efforts aérodynamiques s'exerçant sur le récupérateur 4 soient parfaitement symétriques de part et d'autre du plan P, et situés à distance significative de part et d'autre du plan P, donne une grande stabilité au récupérateur 4, bien qu'il ne soit suspendu que par deux câbles 16.

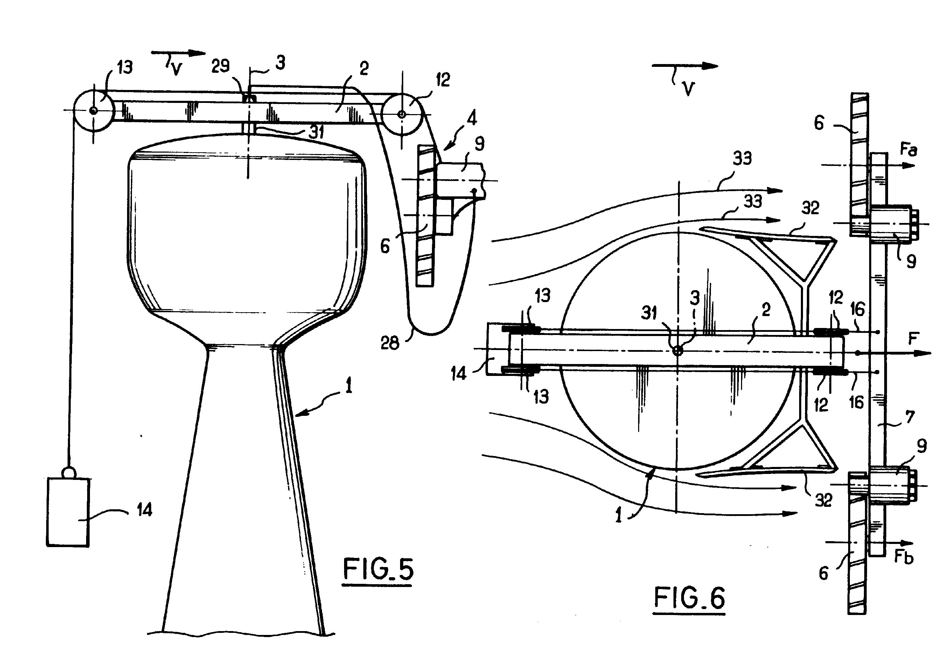

Dans l'exemple représenté aux figures 5 et 6, le mât 1 est un château d'eau. On ne décrira de cet exemple que ses différences par rapport au précédent. Dans cet exemple, les génératrices 9 alimentent une pompe située à la base du château d'eau, la liaison entre les génératrices 9 et la pompe (non représentée) située à l'intérieur du château d'eau, sont réalisées par un fil électrique souple 28 raccordé électriquement, par un contact tournant 29, à un connecteur situé dans l'intérieur creux du pivot 31 fixé au mât 1 et autour duquel pivote le bâti orientable 2.

Dans une machine de faible hauteur, les moyens de transformation d'énergie 9 pourraient être une pompe raccordée par tuyaux souples et joints tournants à l'intérieur du pivot 31 qui renfermerait deux tubes, l'un pour l'aspiration de l'eau et l'autre pour son refoulement.

Comme schématisé à la figure 6, le bâti 2 peut être solidaire de deux déflecteurs 32 qui, disposés entre le corps du château d'eau 1 et les rotors 6, canalisent les filets d'air 33 vers les rotors 6.

Dans le cas de l'application à un château d'eau la régulation de vitesse de la machine n'est pas critique si l'on est certain qu'il y a toujours possibilité de pomper de l'eau vers le sommet du château d'eau. On peut en effet faire en sorte qu'à la vitesse nominale de la pompe la puissance consommée par celle-ci corresponde à la puissance électrique fournie par les génératrices 9 lorsque le rotor tourne à sa vitesse nominale et que le récupérateur est en équilibre avec le contrepoids 14. Il n'est pas grave en cas de vent trop faible que le débit de la pompe diminue.

Dans le cas d'un château d'eau, la machine selon l'invention est donc, pour l'essentiel, complètement régulée par les moyens d'auto-positionnement autour de l'axe 3 et par les moyens d'auto-positionnement en hauteur par équilibre avec le contrepoids 14.

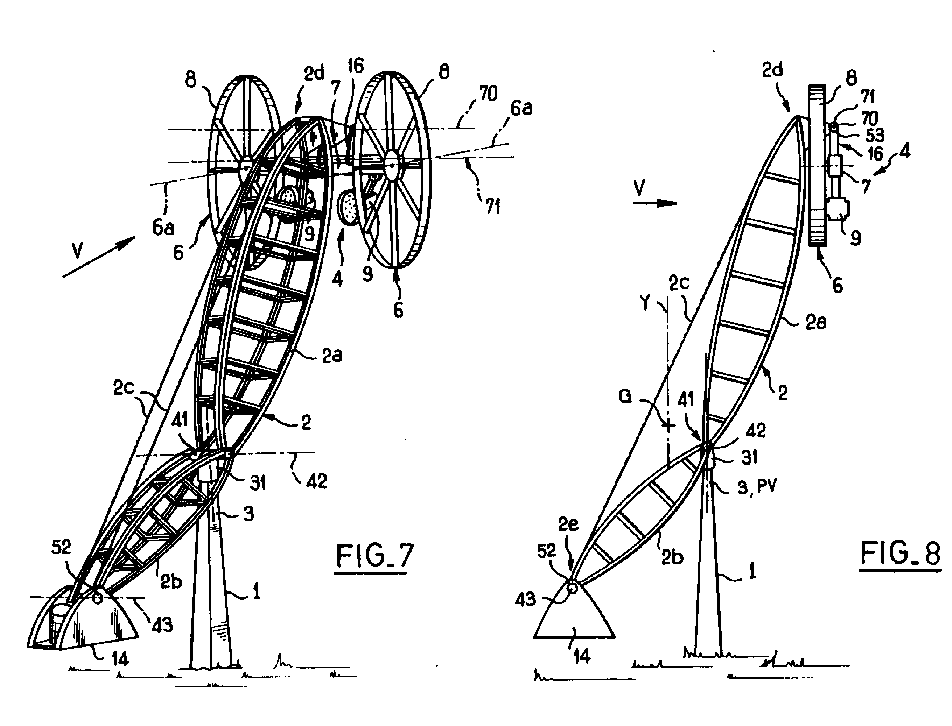

On ne décrira l'exemple des figures 7 et 8 qu'en ce qui concerne ses différences par rapport à celui de la figure 1. Le bâti orientable 2 comprend une tourelle 31, qui coiffe le mât 1, et une structure basculante 2a, 2b, 2c, qui est articulée à la tourelle 31 selon un axe horizontal de basculement 42 au moyen d'une articulation 41. L'axe de basculement 42 coupe l'axe de pivotement 3 au sommet du mât 1.

La structure basculante comporte un premier bâti individuel 2a et un second bâti individuel 2b qui sont articulés l'un à l'autre, selon l'axe de basculement 42 et qui s'étendent l'un d'un côté, l'autre de l'autre côté d'un plan vertical PV, contenant l'axe de basculement 42.

Sous l'effet de leur poids propre et du poids des éléments qu'ils portent, éléments qui seront décrits ci-après, les deux bâtis individuels 2a et 2b tendent à pivoter chacun vers le bas, c'est-à-dire dans des sens opposés autour de l'axe de basculement 42. Pour combattre cette tendance et solidariser les deux bâtis individuels 2a et 2b en rotation autour de l'axe de basculement 42, la structure basculante comprend en outre deux câbles de traction 2c, montés en parallèle, ancrés chacun à l'extrémité 2d du bâti 2a et à l'extrémité 2e du bâti 2b opposées à l'axe de basculement 42. Les câbles 2c s'étendent au-dessus de l'axe de basculement 41 perpendiculairement à celui-ci. Ainsi à l'égard des charges auxquelles il est soumis, l'ensemble constitué par les bâtis 2a et 2b et les câbles 2c se comporte comme une structure rigide, tout en étant constitué d'éléments de taille relativement réduite et faciles à assembler sur site. L'extrémité 2d du bâti individuel 2a est constituée d'une pièce d'accrochage à laquelle le récupérateur 4 est suspendu.

La pièce d'accrochage 2d comprend, en son extrémité dirigée latéralement à l'opposé du plan PV, un tube 53 ayant pour axe un axe dit de suspension 70 sensiblement horizontal et parallèle à l'axe 42.

Des moyens de liaison 16 fermés en boucle, tels que deux sangles, chaînes ou courroies, montés en parallèle, relient le tube 53 à la monture 7 et, plus précisément, entourent le tube 53 et la poutre maîtresse de la monture 7, laquelle poutre maîtresse est un tube d'axe 71, sensiblement horizontal et parallèle aux axes 70 et 42.

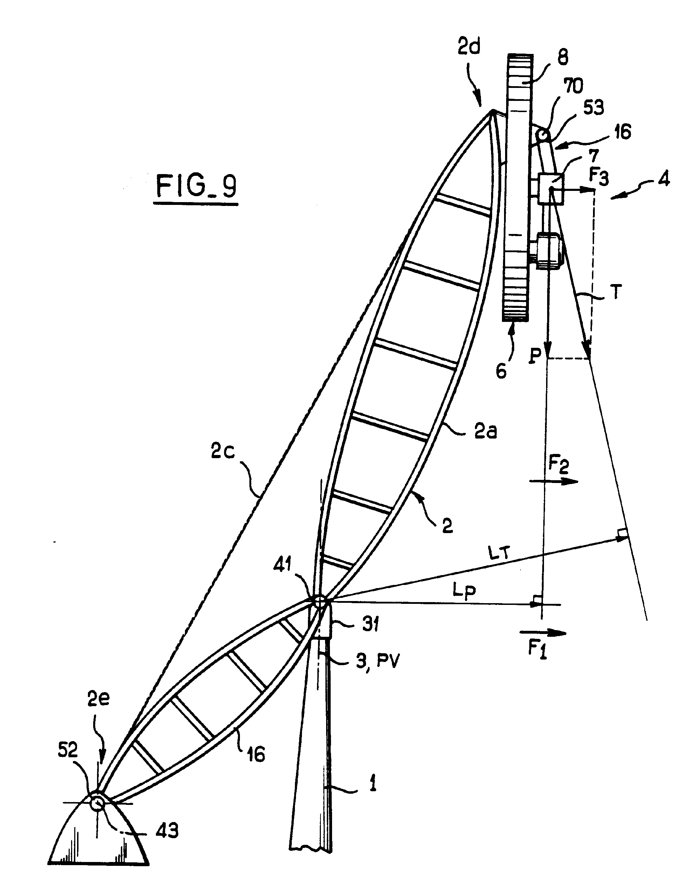

De plus, les moyens de liaison en boucle 16 sont empêchés de glisser dans le sens circonférentiel par rapport au tube 53 et par rapport à la poutre maîtresse de la monture 7. Dans cet exemple, le tube 53 peut tourner autour de son axe 70 par rapport à la pièce d'accrochage 2d, et sa position angulaire est commandée en fonction de l'inclinaison de la structure 2a, 2b, 2c autour de l'axe de basculement 42 pour que les axes des rotors 6 soient horizontaux quelle que soit ladite inclinaison. En cas de vent (figure 9), la suspension 16 s'incline sous l'action des forces horizontales F3 s'exerçant sur le récupérateur, mais maintient le récupérateur dans la position où les axes des rotors sont horizontaux. Le centre de gravité du récupérateur 4 est situé sur l'axe 71 de la monture 7, de sorte que le poids du récupérateur 4 tend en permanence à placer l'axe 71 dans le plan vertical contenant l'axe 70, et n'exerce aucun couple autour de l'axe 71.

A l'extrémité 2e du second bâti individuel 2b est relié un contrepoids 14 par une articulation 52 permettant au contrepoids 14 d'être libre en rotation autour d'un axe d'articulation 43 parallèle à l'axe 42 et écarté du plan PV. Comme représenté à la figure 8, le contrepoids 14 est tel que le centre de gravité G de l'équipage mobile (comprenant la structure basculante 2a, 2b, 2c, le contrepoids 14 et le récupérateur 4) soit situé du même côté du plan PV que le contrepoids 14.

Ainsi, en l'absence d'efforts autres que gravitaires sur l'équipage mobile 2a, 2b, 2c, 4, 14, en particulier en l'absence de vent, le récupérateur 4 se place en position haute dite "de vent faible", à une altitude nettement supérieure à celle de l'axe de basculement 42. La structure basculante 2a, 2b, 2c étant alors fortement inclinée et le contrepoids 14 étant proche du sol. Dans cette situation, le centre de gravité G de l'équipage mobile est situé à une altitude supérieure à celle de l'axe de basculement 42.

En cas de vent, il s'exerce sur l'équipage mobile 2a, 2b, 2c, 4, 14, un effort aérodynamique F3 (figure 9) que, pour simplifier, on considère comme situé dans le plan des axes 6a des rotors 6 du récupérateur 4. En réalité, compte tenu des efforts aérodynamiques s'exerçant sur les bâtis 2a et 2b, cet effort est situé un peu plus bas que les axes 6a quand la structure basculante est en position de vent faible, et un peu plus haut que les axes 6a lorsque, comme on le verra plus loin, le bâti 2a fait un angle plus grand avec le plan PV.

L'effort F3 exerce sur la structure basculante, autour de l'axe de basculement 42, un moment qui est orienté en sens contraire de celui exercé par le poids P de l'équipage mobile au centre de gravité G.

Ainsi, le récupérateur 4 se trouve en position haute, jusqu'à ce que le vent atteigne la vitesse correspondant à la puissance nominale de la machine.

Lorsque le vent atteint ce seuil d'intensité, le couple exercé par la force aérodynamique autour de l'axe de basculement 42 excède le couple exercé en sens contraire autour du même axe par le poids de l'équipage mobile 2a, 2b, 2c, 4, 53 et l'équipage mobile pivote autour de l'axe de basculement 42 dans le sens de la descente du récupérateur 4 vers le sol, jusqu'à une position d'équilibre dans laquelle le moment de la force aérodynamique et le moment du poids de l'équipage mobile autour de l'axe de basculement 42 sont égaux et opposés, c'est-à-dire lorsque le couple exercé par la traînée aérodynamique a suffisamment décru, pour ne plus être excédentaire par rapport au couple exercé par le poids de l'équipage mobile.

Ce nouvel équilibre peut être trouvé car quand la structure basculante pivote autour de l'axe 42 dans le sens de la descente du récupérateur vers le sol, la force aérodynamique F3 diminue pour devenir une nouvelle force F2 plus faible car l'intensité du vent est une fonction croissante de l'altitude.

Si le couple exercé par le poids était indépendant de l'inclinaison de l'équipage mobile autour de l'axe de basculement 42, le nouvel équilibre serait atteint, lorsque le couple de la traînée aérodynamique de l'équipage mobile serait lui-même revenu à la valeur de seuil, au-delà de laquelle l'équipage mobile quitte la position de vent faible. Mais comme le bras de levier, sous lequel agit la traînée aérodynamique, diminue lorsque l'équipage mobile se rapproche du sol, la force aérodynamique à laquelle correspondrait cette valeur de seuil du couple de la force aérodynamique serait d'autant plus grande que le récupérateur serait plus proche du sol. Dans ces conditions, la puissance délivrée par la machine tendrait à être d'autant plus forte que le récupérateur 4 est proche du sol. Ces inconvénients sont évités grâce à la position particulière du centre de gravité G de l'équipage mobile 2a, 2b, 2c, 4, 53, qui est situé à une altitude légèrement supérieure à celle de l'axe de basculement 42, quand la structure basculante est en position de vent faible.

Ainsi, quand la structure basculante pivote vers une autre position autour de l'axe de basculement 42, la verticale Y (figure 8) passant par le centre de gravité G se rapproche de l'axe 42 et par conséquent le couple qu'exerce le poids de l'équipage mobile diminue.

Par conséquent, le couple aérodynamique nécessaire pour équilibrer le couple dû au poids diminue également. Ainsi, il est possible de faire en sorte que la traînée aérodynamique s'exerçant sur le récupérateur varie peu en fonction de l'inclinaison de la structure basculante.

Dans l'exemple représenté aux figures 7 à 9, la position particulière du centre de gravité G est obtenue en donnant à la ligne brisée passant par les axes 43, 42, 71 une concavité dirigée vers le haut.

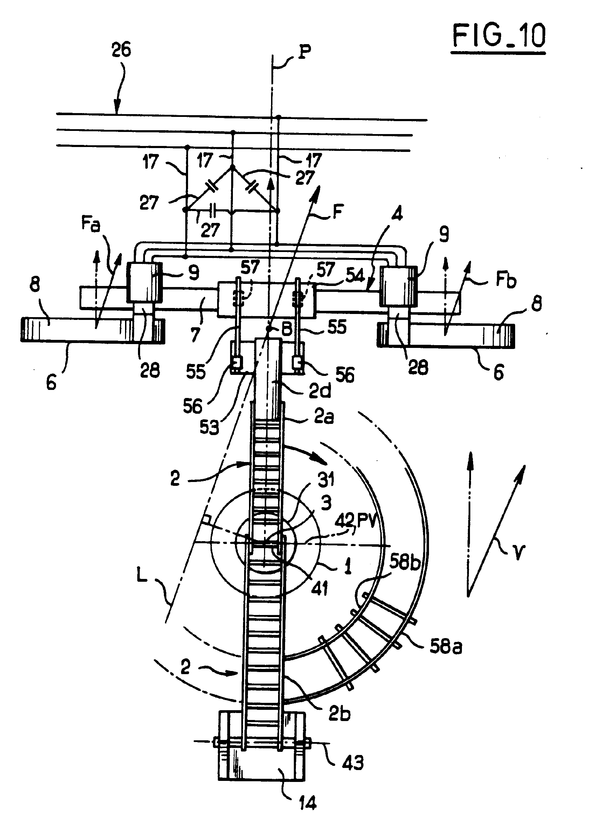

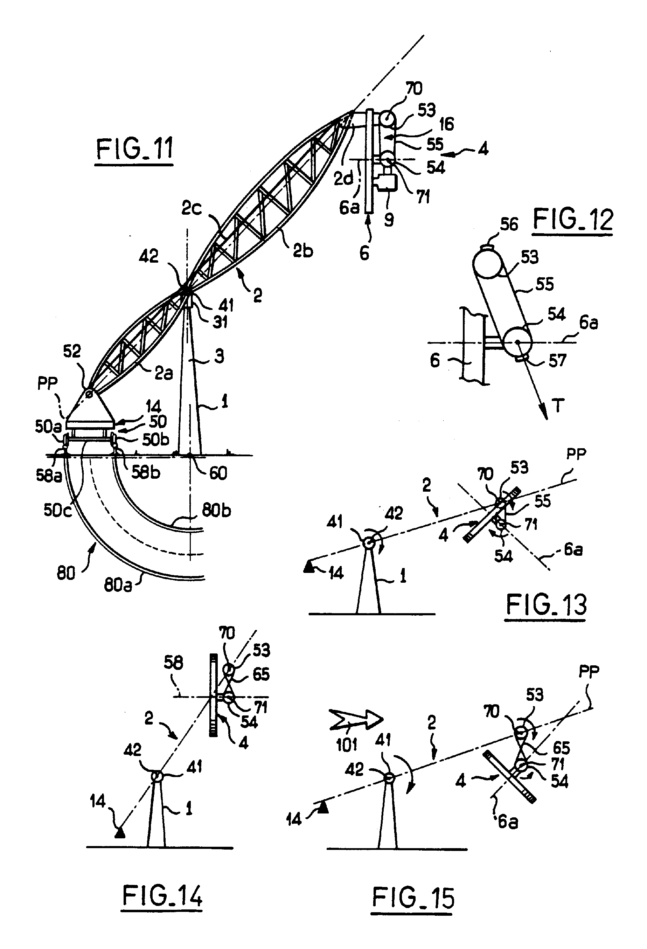

Dans le mode de réalisation des figures 10 et 11, le contrepoids 14 est muni de moyens de roulement 50. Ces moyens de roulement peuvent comprendre une ou plusieurs roues, par exemple deux roues 50a,50b, reliées par un essieu 50c, dont l'axe coupe l'axe 3, au moins lorsque la structure basculante est en position de vente faible, comme représenté sur la figure 11, auquel cas les roues 50a, 50b s'appuient sur deux rails 58a, 58b d'une voie ferrée circulaire 80 ayant pour axe l'axe de pivotement 3, aménagée sur le sol autour du mât 1. L'appui des roues 50a, 50b sur la voie 80 définit la position de vent faible de la structure basculante, sans que le contrepoids 14 n'exerce dans cette position un couple sur le mât 1.

De plus, dans ce mode de réalisation, l'axe 43 de suspension de contrepoids 14, l'axe 42 de basculement, et l'axe 70 des tubes 53, qui est l'axe de suspension du récupérateur 4, sont contenus dans un même plan, appelé plan principal PP, de la structure basculante. De plus, il est fait en sorte que le centre de gravité de la structure basculante 2a, 2b, 2c soit situé dans le plan principal PP.

Ainsi, la structure basculante constitue une balance, c'est-à-dire que la force verticale descendante à appliquer sur l'axe 70, pour que la structure basculante soit en équilibre autour de l'axe de basculement 42 est la même, quelle que soit l'inclinaison du plan PP autour de l'axe de basculement 42.

Au contraire, dans l'exemple des figures 7 à 9, grâce à la position particulière du centre de gravité G de l'équipage mobile, la force verticale descendante à appliquer à l'axe 70, pour équilibrer la structure basculante était d'autant plus faible que le récupérateur était proche du sol.

De plus, dans le présent exemple, la suspension du récupérateur est identique à celle de l'exemple précédent excepté que les tubes 53 sont fixés à la pièce d'accrochage 2d. Les tubes 53 et 54 sont de même diamètre.

Le système de suspension par boucle 55 provoque une rotation sur elle-même de la poutre maîtresse 7 autour de l'axe principal 71 du récupérateur 4, en même temps que la structure basculante 2a, 2b, 2c pivote autour de l'axe de basculement 42.

Les figures 12 et 13 illustrent schématiquement cet effet de rotation du récupérateur 4 dans une machine munie de moyens de suspension 55 agencés suivant une première manière dans laquelle les boucles ont, comme aux figures 7 à 9, une configuration ovale.

Le centre de gravité du récupérateur est situé sur l'axe 71, qu'on appellera "axe de correction" pour des raisons qui apparaîtront ci-après.

En l'absence de vent, l'axe de correction 71 se positionne à l'aplomb de l'axe de suspension 70. Les fixations 56, 57, qui empêchent les boucles 55 de glisser autour des tubes 53 et 54, sont placées de telle manière que lorsque la structure basculante 2a, 2b, 2c est en position de vent faible et lorsqu'il n'y a pas de vent, les axes 6a des rotors soient horizontaux.

En cas de vent, tant que la structure basculante reste en position de vent faible, les deux brins parallèles de chaque boucle 55 s'inclinent pour être parallèles à la tension résultante T, mais, on le vérifie aisément, grâce à l'égalité de diamètre entre les tubes 53 et 54, les axes 6a des rotors 6 restent horizontaux (figure 12). En d'autres termes, avec un tel montage, l'angle formé par les axes des rotors 6a avec le plan principal PP est constant. Par conséquent, comme représenté schématiquement à la figure 7, quand le plan PP s'incline dans le sens rapprochant le récupérateur 4 du sol, l'axe 6a du rotor s'incline également. Ceci a pour effet de diminuer l'aire de la section de la veine d'air qui traverse chaque rotor, donc de diminuer la traînée aérodynamique en résultant. La puissance captée par la machine est diminuée davantage encore, car l'axe des rotors n'est plus parallèle au vent.

Ainsi, lorsque la machine est en équilibre différent de la position vent faible, la traînée aérodynamique sur le récupérateur est supérieure à la traînée maximale en position de vent faible (faute de quoi la machine retournerait en position de vent faible). Toutefois, la puissance est captée avec moins d'efficacité par la machine, et reste donc sensiblement la même que la puissance maximale en position vent faible.

Les boucles de suspension peuvent être agencées d'une autre manière représentée aux figures 14 et 15. En l'absence de vent, la situation du récupérateur 4 vis à vis de la structure basculante 2 est identique à celle illustrée à la figure 5 à la seule différence que les boucles de suspension sont croisées en forme de huit.

En présence d'un vent de forte intensité 101, la rotation de la structure basculante 2a, 2b, 2c entraîne du fait de l'agencement des boucles 65 en forme de huit et du fait que l'axe 71 se positionne par rapport à l'axe 70 d'après l'orientation de la tension résulante, une rotation en sens inverse du tube 54 solidaire de la poutre maîtresse 7 du récupérateur 4, provoquant une inclinaison de celui-ci dans le sens opposé à celui obtenu avec la première manière de disposer les boucles de suspension.

Ces modes de disposition des boucles de suspension produisent une adaptation automatique de la puissance de la machine au moyen d'une suspension souple qui assure un découplage entre d'une part les rotors producteurs de vibrations et d'autre part le mât 1 et le bâti 2.

Dans le second mode de réalisation des boucles (figures 14 et 15), les axes 6a s'inclinent si l'axe 71 s'écarte de l'aplomb de l'axe 70. Par conséquent, en cas de coup de vent, ce second mode de réalisation produit un mouvement d'esquive de la part des rotors 6 en attendant que la structure basculante 2a, 2b, 2c se repositionne autour de l'axe de basculement 42.

Bien entendu, la présente invention n'est pas limitée aux exemples décrits, et des aménagements peuvent être apportés à ces exemples.

Ainsi, on peut prévoir d'autres moyens de rappel qu'un contrepoids, par exemple un ou plusieurs ressorts de rappel. Des butées autres que les roues 50 peuvent être envisagées, par exemple un contact glissant du contrepoids sur une piste appropriée.

Dans les exemples des figures 11 à 15, les diamètres des tubes 53 et 54 peuvent être différents pour obtenir une relation de dépendance déterminée entre les angles formés, avec le plan principal PP, par les axes 6a et par les brins de la boucle 55.

On peut même réaliser une fonction plus élaborée en donnant à l'un au moins des tubes 53 et 54 une forme de came, par exemple une forme d'ellipse. Chaque orientation du plan PP résulte d'une force aérodynamique déterminée qui correspond à son tour à un angle déterminé des brins de la boucle 55 par rapport à la verticale et par conséquent par rapport au plan PP. Ainsi donner aux axes 6a une orientation déterminée par rapport au plan PP en fonction de l'angle entre les brins de la boucle 55 et le plan PP revient à donner aux axes 6a une orientation déterminée par rapport au sol en fonction de inclinaison du plan PP. On peut ainsi, entre autres, maintenir les axes 6a sensiblement horizontaux quelle que soit l'inclinaison de la structure basculante. Il n'est alors plus nécessaire, dans l'exemple des figures 7 à 9, de commander la position angulaire du tube 53 par rapport à la structure basculante en fonction de l'inclinaison de cette dernière.

Il pourrait être prévu que les moyens de transformation d'énergie alimentent en courant alternatif une lampe éclairant les pales des rotors de manière à animer un message publicitaire ou autre porté par les pales. La fréquence du courant est sensiblement proportionnelle à la vitesse de rotation des pales. On fait de plus en sorte qu'un nombre entier d'alternances électriques corresponde sensiblement à un angle de rotation de chaque rotor égal à un pas angulaire entre deux pales du rotor. Ainsi, de nuit, le message publicitaire ou autre porté par les pales forme une image fixe, ou tournant relativement lentement dans un sens ou dans l'autre. On a représenté en trait mixte à la figure 3 un tel équipement de la machine, avec deux lampes 40 portées par le bâti 2, chacune éclairant l'un des rotors 6. De manière non représentée, les lampes 40 sont alimentées entre l'un des conducteurs 17 et la masse, ou entre deux conducteurs 17.

## Revendications

**1.** Procédé pour réguler une machine aérienne pour la transformation de l'énergie éolienne en énergie utile, du type comprenant un récupérateur d'énergie rotatif (4) mobile en hauteur, caractérisé en ce qu'on positionne le récupérateur de manière sensiblement stable à une hauteur par rapport au sol qui est une fonction décroissante de la force du vent.

2. Machine aérienne pour la transformation de l'énergie éolienne en énergie utile pour la mise en oeuvre du procédé selon la revendication 1, comprenant un mât (1), un récupérateur d'énergie rotatif (4), des moyens (2, 11, 14) de déplacement en hauteur du récupérateur (4) par rapport au mât (1) sous l'action de l'effort aérodynamique (F, F2) s'exerçant sur le récupérateur et à l'encontre de moyens de rappel et un dispositif de transformation d'énergie (9) relié au récupérateur (4) pour être entraîné en rotation par le récupérateur (4), caractérisée en ce que les moyens de déplacement en hauteur (2, 11, 14) sont conçus pour positionner le récupérateur (4) de manière sensiblement stable à une hauteur par rapport au sol qui est une fonction décroissante de la force du vent.

3. Machine selon la revendication 2, caractérisée en ce que, au titre des moyens de déplacement en hauteur, le récupérateur est relié à un contrepoids (14) par des moyens souples (11) qui, entre le récupérateur (4) et le contrepoids (14), contournent des moyens de renvoi (12, 13) soutenus au moins indirectement par le mât (1).

4. Machine selon la revendication 3, caractérisée en ce que la masse du contrepoids (14) est choisie pour que le récupérateur (4) soit rappelé en position haute en l'absence de vent.

5. Machine selon l'une des revendications 3 ou 4, caractérisée en ce que les moyens souples (11) comprennent deux câbles (16) montés en parallèle et écartés latéralement l'un de l'autre.

6. Machine aérienne conforme à l'une des revendications 3 à 5, caractérisée en ce que les moyens de renvoi (12) sont asservis aux variations de vitesse de rotation du récupérateur (4) ou du dispositif de transformation d'énergie (9) pour régler l'altitude du récupérateur (4) dans le sens d'une régulation de ladite vitesse de rotation.

7. Machine selon l'une des revendications 3 à 6, dans laquelle le récupérateur est relié au mât par l'intermédiaire d'un bâti (2) orientable autour d'un axe vertical (3) par rapport au mât (1), caractérisée en ce que le bâti (2) porte les moyens de renvoi (12, 13), lesquels comprennent au moins une poulie (12) au-dessus du récupérateur (4) et au moins une poulie (13) située de l'autre côté de l'axe vertical (3) au-dessus du contrepoids (14).

8. Machine selon l'une des revendications 2 à 5, caractérisée par des moyens (18, 21, 24) pour limiter la vitesse de rotation du récupérateur (4) indépendamment de l'effort aérodynamique (F) subi par le récupérateur (4).

9. Machine selon la revendication 2, dans laquelle les moyens de déplacement en hauteur comprennent une structure basculante (2a, 2b, 2c) qui porte le récupérateur (4) à distance d'un axe de basculement sensiblement horizontal (42), selon lequel ladite structure basculante est articulée relativement au mât, caractérisée en ce que au titre des moyens de rappel un plan idéal vertical (PV), contenant l'axe de basculement (42), s'étend entre le récupérateur (4) et le centre de gravité (G) de l'équipage (2a, 2b, 2c, 14, 4) mobile autour de l'axe de basculement (42).

10. Machine conforme à la revendication 9, caractérisée en ce que le centre de gravité (G) de l'équipage mobile autour de l'axe de basculement (42) est situé plus haut que l'axe de basculement (42).

11. Machine conforme à l'une des revendications 9 ou 10, caractérisée en ce que la structure basculante comprend deux bâtis élémentaires (2a, 2b) reliés l'un au récupérateur, et l'autre à un contrepoids, articulés l'un à l'autre selon l'axe de basculement (42) et reliés l'un à l'autre par des moyens de rigidification (2c) s'étendant au-dessus de l'axe de basculement et travaillant en traction.

12. Machine selon la revendication 11, caractérisée en ce que les moyens de rigidificatioon (2c) comprennent au moins un câble de traction.

13. Machine selon l'une des revendications 9 à 12 comprenant en outre des moyens de correction (2d, 16) pour positionner angulairement le récupérateur autour d'un axe de correction (71) sensiblement parallèle à l'axe de basculement (42) en fonction de la position angulaire de la structure basculante autour de l'axe de basculement, caractérisée en ce qu'elle comprend en outre des moyens de support en suspension (16) du récupérateur (4) relativement à la structure basculante, les moyens de correction étant conçus pour orienter le récupérateur (4) en suspension par rapport à la structure basculante (2a, 2b, 2c) autour de l'axe de correction (71) en fonction d'un angle formé entre la structure basculante (2a, 2b, 2c) et les moyens de support en suspension (16) autour d'un axe de suspension (70).

14. Machine selon la revendication 11, caractérisée en ce que les moyens de correction sont actionnés par le poids du récupérateur.

15. Machine selon la revendication 14, caractérisée en ce que les moyens de support en suspension (16) comprennent au moins un élément souple (55), fermé en boucle, qui entoure un organe support (53) solidaire de la structure basculante et un organe support (54) solidaire du récupérateur (4), en ce qu'au titre des moyens de correction, l'élément souple est empêché de glisser périphériquement par rapport aux deux organes support, de façon que lorsque la structure basculante pivote autour de son axe de basculement (42), l'ensemble constitué par le récupérateur (4) et l'élément souple (55) pivotent par rapport à la structure basculante sous l'action des forces (P, F3) s'exerçant sur le récupérateur (4) et l'élément souple en prise avec l'organe support (53) de la structure basculante oriente le récupérateur (4) autour de l'axe de correction (71).

16. Machine selon la revendication 15, caractérisée en ce que l'élément souple (65) est fermé en boucle croisée, en forme générale de huit.

17. Machine selon l'une des revendications 13 à 16, caractérisée en ce que l'axe de correction (71) passe sensiblement par le centre de gravité du récupérateur (4).

18. Machine conforme à l'une des revendications 2 ou 8 à 11, caractérisée en ce qu'elle comprend des moyens souples de support en suspension du récupérateur.

19. Machine conforme à l'une des revendications 2 à 18, caractérisée en ce que le récupérateur (4) comprend deux rotors (6) disposés côte à côte.

20. machine conforme à l'une des revendications 2 à 19, comprenant des moyens d'appui limitant la course du récupérateur vers le haut, caractérisée en ce que lesdits moyens d'appui reposent sur le sol lorsque le récupérateur est en position de vent faible.

21. Machine conforme à la revendication 20 dont le récupérateur pivote autour d'un axe vertical (3) lié au mât, caractérisée en ce que les moyens d'appui comprennent des moyens de roulement (50) qui, lorsque le récupérateur est en position de vent faible, s'appuient sur une voie circulaire (80) supportée par le sol autour du mât (1).

22. Machine selon l'une des revendications 2 à 21, caractérisée en ce que son dispositif de transformation d'énergie produit du courant alternatif et alimente un dispositif d'éclairage de ses pales pour produire un effet stroboscopique.

**Patentansprüche**

1. Verfahren zur Regelung einer oberirdischen Maschine zur Umwandlung von Windenergie in Nutzenergie, die einen höhenveränderbaren rotierenden Energiewandler aufweist, dadurch gekennzeichnet, daß der Wandler in einer im wesentlichen stabilen weise in einer Höhe über dem Boden positioniert wird, die mit zunehmender Windstärke abnimmt.

2. Oberirdische Maschine zur Umwandlung von Windenergie in Nutzenergie zur Durchführung des Verfahrens nach Anspruch 1 mit einem Mast(1), einem rotierenden Energiewandler(4), Höhenverstellmittel(2, 11, 14)für den Wandler(4)relativ zum Mast(1)unter der Wirkung von aerodymamischen Kräften(F, F 2), die auf den Wandler und gegen Rückstellmittel einwirken, und mit einer mit dem Wandler(4)verbundenen Vorrichtung(9)zur Umwandlung der Energie, die mit dem Wandler(4)verbunden ist, um durch den Wandler(4)in Rotation versetzt zu werden, dadurch gekennzeichnet, daß die Höhenverstellmittel(2, 11, 14) zu einer im wesentlichen stabilen Positionisierung des Wandlers(4)in einer Höhe über dem Boden ausgelegt sind, die eine abnehmende Funktion der Windstärke ist.

3. Maschine nach Anspruch 2, dadurch gekennzeichnet, daß als Höhenverstellmittel vorgesehen ist, dass der Wandler mit einem Gegengewicht(14)über flexible Verbindungen(11)verbunden ist, die zwischen dem Wandler(4)und dem Gegengewicht(14) Umlenkmittel(12, 13), umschlingen, die ihrerseits wenigstens indirekt vom Mast(1)gehalten werden.

4. Maschine nach Anspruch 3, dadurch gekennzeichnet, daß die Masse des Gegengewichts(14)so gewählt ist, daß der Wandler in eine hohe Position bei der Abwesenheit von Wind eingestellt ist.

5. Maschine nach Anspruch 3 oder 4, dadurch gekennzeichnet, daß die flexiblen Verbindungsmittel(11)zwei Kabel(16)aufweisen, die parallel und mit seitlichem Abstand voneinander angeordnet sind.

6. Oberirdische Maschine nach einem der Ansprüche 3 - 5, dadurch gekennzeichnet, daß die Umlenkmittel in Abhängigkeit von Variationen der Rotationsgeschwindigkeit des Wandlers(4)oder der Vorrichtung zur Umwandlung der Energie(9)gesteuert werden, um die Höhe des Wandlers(4) in dem Sinn der Regelung der genannten Rotationsgeschwindigkeit einzustellen.

7. Maschine nach einem der Ansprüche 3 - 6, bei der der Wandler mit dem Mast(1)über einen Träger(2)verbunden ist, der um eine vertikale Achse(3)relativ zum Mast(1) einstellbar ist, dadurch gekennzeichnet, daß der Träger (2)die Umlenkmittel(12, 13)trägt, die wenigstens eine Umlenkrolle über dem Wandler(4)und wenigstens eine auf der anderen Seite der vertikalen Achse(3)über dem Gegengewicht(14)angeordnete Umlenkrolle(13)aufweist.

8. Maschine nach einem der Ansprüche 2 - 5, gekennzeichnet durch Mittel(18, 21, 24)zur Begrenzung der Rotationsgeschwindigkeit des Wandlers(4)unabhängig von der auf den Wandler(4)wirkenden aerodymamischen Belastung(F).

9. Maschine nach Anspruch 2, bei der die Höhenverstelmittel einen Schwenkaufbau 2 a, 2 b, 2 c aufweisen, der den Wandler (4)mit Abstand von einer im wesentlichen horizontalen Schwenkachse(42) trägt , um die der genannte Schwenkaufbau relativ zum Mast drehbar ist, dadurch gekennzeichnet, daß als Rückstellmittel vorgesehen ist, dass eine ideale vertikale Ebene (PV), die die Schwenkachse(42)enthält, zwischen dem Wandler(4)und dem Schwerpunkt G der um die Schwenkachse (42)beweglichen Teile(2 a, 2 b, 2 c, 14, 4) erstreckt.

10. Maschine nach Anspruch 9, dadurch gekennzeichnet, daß der Schwerpunkt(G)der um die Schwenkachse(42)bewegbaren Teile oberhalb der Schwenkachse(42) angeordnet ist.

11. Maschine nach Anspruch 9 oder 10, dadurch gekennzeichnet, daß der Schwenkaufbau zwei Tragelemente(2 a, 2 b)aufweist, von denen der eine mit dem Wandler und der andere mit dem Gegengewicht verbunden ist, die relativ zueinander um die Schwenkachse(42) drehbar sind und die miteinander durch Versteifungsmittel(2 c)verbunden sind, die sich über der Schwenkachse erstrecken und auf Zug belastet sind.

12. Maschine nach Anspruch 11, dadurch gekennzeichnet, daß die Versteifungsmittel(2 c)wenigstens ein Zugkabel aufweisen.

13. Maschine nach einem der Ansprüche 9 - 12 mit Korrekturmitteln (2 d, 16)zur Winkelpositionierung des Wandlers um eine Korrekturachse(71)herum, die im wesentlichen parallel zur Schwenkachse(42)verläuft in Abhängigkeit von der Winkelposition des Schwenkaufbaus um die Schwenkachse , dadurch gekennzeichnet, daß eine Aufhängung(16)für die Lagerung des Wandlers(4)relativ zu dem Schwenkaufbau vorgesehen ist, und daß die Korrekturmittel zur Ausrichtung des aufgehängten Wandlers(4)relativ zu dem Schwenkaufbau(2 a, 2 b, 2 c) um die Korrektionsachse(71)in Abhängigkeit von dem zwischen dem Schwenkaufbau(2 a, 2 b, 2 c)und der Aufhängung(16) eine Aufhängachse(70)herum ausgebildeten Winkel ausgelegt sind.

14. Maschine nach Anspruch 11, dadurch gekennzeichnet, daß die Korrekturmittel durch das Gewicht des Wandlers betätigt werden.

15. Maschine nach Anspruch 14, dadurch gekennzeichnet, daß die Aufhängung(16)wenigstens ein flexibles Element(55) aufweisen, das zu einer Schlaufe geschlossen ist und ein festes Tragorgan(53) des Schwenkaufbaus und ein festes Tragorgan (54)des Wandlers umschlingt, und daß als Korrekturmittel vorgesehen ist, dass das flexible Element gehindert wird, relativ zur Oberfläche der beiden Tragorgane zu gleiten, so daß beim Drehen des Schwenkaufbaus um seine Schwenkachse(42), die aus dem Wandler(4) und dem flexiblen Element(55)gebildete Anordnung relativ zum Schwenkaufbau unter der Einwirkung auf den Wandler(4)wirkenden Kräfte(P, F 3)gedreht wird und das im Eingriff mit dem Tragorgan(53)des Schwenkaufbaus stehende flexible Element den Wandler (4) um die Korrektionsachse (71) dreht.

16. Maschine nach Anspruch 15, dadurch gekennzeichnet, daß das flexible Element(65)zu einer gekreuzten, die generelle Form einer acht bildenden Schlaufe geschlossen ist.

17. Maschine nach einem der Ansprüche 13 - 16, dadurch gekennzeichnet, daß die Korrektionsachse(71)im wesentlichen durch den Schwerpunkt des Wandlers(4)verläuft.

18. Maschine nach einem der Ansprüche 2 oder 8 - 11, dadurch gekennzeichnet, daß sie eine flexible Aufhängung des Wandlers aufweist.

19. Maschine nach einem der Ansprüche 2 - 18, dadurch gekennzeichnet, daß der Wandler(4)zwei nebeneinander angeordnete Rotoren(6)aufweist.

**20.** Maschine nach einem der Ansprüche 2 - 19 mit Anschlagmitteln zur Begrenzung der Bewegung des Wandlers nach oben, dadurch gekennzeichnet, daß sich die Anschlagmittel auf dem Boden abstützen, wenn der Wandler in seiner für einen schwachen Wind vorgesehenen Position ist.

**21.** Maschine nach einem Anspruch 20, bei der der Wandler um eine mit dem Mast verbundene vertikale Achse 3 drehbar ist, dadurch gekennzeichnet, daß die Anschlagmittel Rollmittel (50) aufweisen, die sich auf einer Kreisbahn (80) auf dem Boden um den Mast(1)herum abstützen, wenn der Wandler in der für schwachen Wind vorgesehenen Position ist.

**22.** Maschine nach einem der Ansprüche 2 - 21, dadurch gekennzeichnet, daß die Vorrichtung zur Umwandlung der Energie Wechselstrom produziert und eine Beleuchtungseinrichtung für seine Rotorblätter speist, um einen stroboskopischen Effekt zu erzeugen.

## Claims

**1.** A method of regulating a wind machine for converting wind energy into useful energy and of the kind comprising a vertically mobile rotating energy recuperator (4), characterised in that the recuperator is positioned substantially stably at an above-ground height which is a decreasing function of wind strength.

**2.** A wind machine for converting wind energy into useful energy, of use for the practice of the method according to claim 1 and comprising a mast (1), a rotating energy recuperator (4), means (2, 11, 14) for moving the recuperator (4) vertically relatively to the mast (1) in dependence upon the aerodynamic force (F, F2) acting on the recuperator and against return means, and an energy conversion device (9) connected to the recuperator (4) for rotation thereby, characterised in that the recuperator- moving means (2, 11, 14) are adapted to position the recuperator (4) substantially stably at an above-ground height which is a decreasing function of wind strength.

**3.** A machine according to claim 2, characterised in that as means for moving the recuperator (4) vertically, the same is connected to a counterweight (14) by flexible means (11) which between the recuperator (4) and the counterweight (14) extend around direction-changing means (12, 13) supported at least indirectly by the mast (1).

**4.** A machine according to claim 3, characterised in that the weight of the counterweight (14) is such that the recuperator (4) is returned to its top position in the absence of wind.

**5.** A machine according to claim 3 or 4, characterised in that the flexible means (11) comprise two parallel and laterally spaced-apart cables (16).

**6.** A machine according to any of claims 3 - 5, characterised in that the direction-changing means (12) are controlled by variations in the rotational speed of the recuperator (4) or energy transformation device (9) to control recuperator height in the sense of a control of the rotational speed.

**7.** A machine according to any of claims 3 - 6, the recuperator being connected to the mast by way of a frame (2) orientable around a vertical axis (3) relatively to the mast (1), characterised in that the frame (2) carries the direction-changing means (12, 13), the same comprising at least one pulley (12) above the recuperator (4) and at least one pulley (13) disposed on the other side of the vertical axis (3) above the counterweight (14).

**8.** A machine according to any of claims 2 - 5, characterised by means (18, 21, 24) limiting the rotational speed of the recuperator (4) independently of the aerodynamic force (F) experienced by the recuperator (4).

**9.** A machine according to claim 2, in which the means for moving the recuperator (4) vertically comprise a tilting structure (2a, 2b, 2c) which carries the recuperator (4) at a distance from a substantially horizontal tilting axis (42) around which the tilting structure is articulated relatively to the mast, characterised in that as return means a vertical imaginary plane (PV) containing the tilting axis (42) extends between the recuperator (4) and the centre of gravity (G) of the equipment (2e, 2b, 2c, 14, 4) movable around the tilting axis (42).

**10.** A machine according to claim 9, characterised in that the centre of gravity (G) of the equipment movable around the tilting axis (42) is disposed higher than such axis.

**11.** A machine according to claim 9 or 1∅, characterised in that the tilting structure comprises two elementary frames (2a, 2b), one of which is connected to the recuperator and the other to a counterweight, the elementary frames being pivotally interconnected along the tilting axis (42) and interconnected by strengthening means (2c) which extend above the tilting axis and work in tension.

**12.** A machine according to claim 11, characterised in that the strengthening means (2c) comprise at least one tensioning cable.

13. A machine according to any of claims 9 - 12 and further comprising correcting means (2d, 16) for angularly positioning the recuperator around a correction axis (71 ), which is substantially parallel to the tilting axis (42), in dependence upon the angular position of the tilting structure around the tilting axis, characterised in that it further comprises means (16) for a suspended support of the recuperator (4) relatively to the tilting structure, the correcting means being adapted to orient the suspended recuperator (4) relatively to the tilting structure (2a, 2b, 2c) around the correcting axis (71) in dependence upon an angle formed between the tilting structure (2a, 2b, 2c) and the suspension means (16) around a suspension axis (7∅).

14. A machine according to claim 11, characterised in that the correcting means are actuated by recuperator weight.

15. A machine according to claim 14, characterised in that the suspension means (16) comprise at least one looped flexible element (55) which extends around a support member (53) rigidly secured to the tilting structure and around a support member (54) rigidly secured to the recuperator (4), as correcting means the flexible element is prevented from sliding peripherally relatively to the two support members so that when the tilting structure pivots around its tilting axis (42) the system embodied by the recuperator (4) and the flexible element (55) is pivoted relatively to the tilting structure by the forces (P, F3) acting on the recuperator (4) and the flexible element which engages the support member (53) of the tilting structure orients the recuperator (4) around the correcting axis (71).

16. A machine according to claim 15, characterised in that the flexible element (65) is closed in a crossed substantially figure-of-eight loop.

17. A machine according to any of claims 13 - 16, characterised in that the correcting axis (71) extends substantially through the centre of gravity of the recuperator (4).

18. A machine according to any of claims 2 or 8 to 11, characterised in that it comprises flexible means for a suspended support of the recuperator.

19. A machine according to any of claims 2 to 18, characterised in that the recuperator (4) comprises two rotors (6) disposed in side-by-side relationship.

20. A machine according to any of claims 2 - 19 comprising bearing means limiting the upwards movement of the recuperator, characterised in that the bearing means rest on the ground when the recuperator is in the low-wind position.

21. A machine according to claim 2∅ in which the recuperator pivots around a vertical axis (3) connected to the mast, characterised in that the bearing means comprise rolling means (5∅) which when the recuperator is in its low-wind position bear on a circular track (8∅) borne by the ground around the mast.

22. A machine according to any of claims 2 to 21, characterised in that its energy conversion device produces alternating current and energizes means for illuminating its blades to produce a stroboscopic effect.

FIG.1

FIG.3

FIG.2

FIG_4

FIG.6

FIG.5

FIG_8

FIG_7

FIG_9

# FIG. 10

FIG. 11

FIG. 12

FIG. 13

FIG. 14

FIG. 15